# EUROPEAN PATENT APPLICATION

(11) **EP 3 009 989 A1**
(43) Date of publication of application: **20.04.2016**
(21) Application number: 15189932.5
(22) Date of filing: 15.10.2015
(51) Int. Cl.: G06T 19/00

(54) **SYSTEM AND METHOD FOR DISTRIBUTED AUGMENTED REALITY**

(30) Priority: 16.10.2014 IN 5165; 03.12.2014 US 201461559485 P
(71) Applicant: Wipro Limited, 560 035 Karnataka (IN)
(72) Inventor: JAYARAJ, Ragupathy, 560068 Karnataka (IN); PRABHU, Mukesh Manjunath, 560102 Karnataka (IN); BHASKARAN, Bansilal, 560100 Karnataka (IN)
(74) Representative: Finnegan Europe LLP

(57) **Abstract**

Systems and methods for distributed augmented reality are described herein. In one example, the method comprises receiving (202) at least one of source data and augmented reality, AR, data from at least one of data source, identifying (204) objects of interest present in at least one of the source data and the AR data based on analysis of the at least one of the source data and the AR data, and generating (206) enhanced AR data, based on the outcome of identification of at least one of the objects of interest and AR enhancement rules. The method further comprises modifying at least one of the source data and the AR data based on the generation and transmitting (220) at least one of the modified source data and the modified AR data to at least one of the one or more client systems.

## Description

### Technical Field

The present subject matter is related, in general to technologies related to augmented reality data and, in particular, but not exclusively to a method and system for distributed augmented reality.

### Background

Augmented reality (AR) generally comprises a live, direct or indirect, view of a physical, real-world environment whose elements are augmented (e.g., supplemented) by computer-generated sensory input. The computer-generated sensory input may include audio, video, graphics, multimedia animations or global positioning system (GPS) data. AR can enhance a user's perception of reality.

Traditionally augmented reality applications have been limited to expensive custom setups used in universities, research and development (R&D) institutes, and academia. With the advent of portable computing systems, such as smartphones and tablets, which have usually embedded processors with high processing capabilities, many of the techniques of AR, which were once confined to high end server systems, have now been implemented in the portable computing systems.

Usually AR implementations involve three primary technologies: a) sensing technologies to identify locations or sites in real space using markers, image recognition algorithms, and sensors; b) information retrieval and overlay technologies to create virtual information and to overlay it on top of live images captured by the camera; and c) display technologies capable of integrating real and virtual information which includes mobile phone display, projectors, as well as augmented reality glasses.

### SUMMARY

Disclosed herein are systems and methods for distributed augmented reality. In one example, the distributed augmented reality server (DARS) system, for sharing augmented reality content among a plurality of users, comprises a processor, a memory communicatively coupled to the processor, wherein the memory stores processor-executable instructions, which, on execution, cause the processor to receive at least one of source data and augmented reality (AR) data from at least one of one or more DARC systems, DARS systems or data sources, identify objects of interest present in at least one of the source data and the AR data based on analysis of the at least one of the source data and the AR data and generate enhanced AR data, based on the outcome of identification of at least one of the objects of interest and AR enhancement rules. The instructions, on execution, further cause the processor to modify at least one of the source data and the AR data based on the generation and transmit at least one of the modified source data and the modified AR data to at least one of the one or more DARC systems, DARS systems or data sources.

In some examples of the present subject matter, the distributed augmented reality client (DARC) system, for sharing augmented reality content among a plurality of users, comprises a processor, a memory communicatively coupled to the processor, wherein the memory stores processor-executable instructions, which, on execution, cause the processor to at least one of receive or capture at least one of augmented reality (AR) data and source data from at least one of a distributed augmented reality server (DARS) system, a data source, a sensor, and a client system (which may be another DARC system), modify at least one of the AR data and the source data by at least one of filter and add annotations on one or more objects of interest present in at least one of the AR data and the source data based on client AR enhancement rules; and render at least one of the modified AR data and the modified source data. The at least one of the modified AR data and the modified source data may be rendered on the client system, or may be rendered on a display.

In an aspect of the present subject matter, the method for distributed augmented reality comprises receiving at least one of source data and augmented reality (AR) data from at least one of data source, identifying objects of interest present in at least one of the source data and the AR data based on analysis of the at least one of the source data and the AR data, and generating enhanced AR data, based on the outcome of identification of at least one of the objects of interest and AR enhancement rules. The method further comprises modifying at least one of the source data and the AR data based on the generation and transmitting at least one of the modified source data and the modified AR data to at least one of the one or more clients systems.

In another aspect of the present subject matter, the method for distributed augmented reality comprises at least one of receiving or capturing at least one of augmented reality (AR) data and source data from at least one of a distributed augmented reality server (DARS) system, a data source, a sensor, and a client system (which may be another DARC system); modifying at least one of the AR data and the source data by at least one of filter and add annotations on one or more objects of interest present in at least one of the AR data and the source data based on client AR enhancement rules; and rendering at least one of the modified AR data and the modified source data. The at least one of the modified AR data and the modified source data may be rendered on the client system or on a display.

It is to be understood that both the foregoing general description and the following detailed description are exemplary and explanatory only and are not restrictive of the present subject matter, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the leftmost digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1a illustrates a network environment implementing a distributed augmented reality server (DARS) system for sharing augmented reality content among a plurality of users, according to some embodiments of the present subject matter.
Fig. 1b illustrates a network environment implementing a distributed augmented reality client (DARC) system for sharing augmented reality content among a plurality of users, according to some embodiments of the present subject matter.
FIGs. 2 and 3 illustrate exemplary computer implemented methods for distributed augmented reality, according to some embodiments of the present subject matter.
FIG. 4 is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

Systems and methods for distributed augmented reality are described herein. The systems and methods may be implemented in a variety of computing systems. The computing systems that can implement the described method(s) include, but are not limited to a server, a desktop personal computer, a notebook or a portable computer, a mainframe computer, a virtual machine, a tablet, a smartphone, image capturing systems, such as cameras, sensors, wearable smart glasses, such as Google™ Glass, and in a mobile computing environment. Although the description herein is with reference to certain computing systems, the systems and methods may be implemented in other computing systems, albeit with a few variations, as will be understood by a person skilled in the art.

Conventionally, augmented reality provides a presentation of a physical, real-world environment that is augmented by additional information, such as audio data, video data, image data, text data, and so forth. For example, a camera of a computing system can capture the image or video of a physical object. As examples, the physical object can be a picture in a magazine or newspaper, a picture on a product box, a geographic landmark, and so forth. An augmented reality presentation of the physical object can then be displayed by the computing system, where the augmented reality presentation of the physical object includes the image or video of the physical object, along with additional data such as any of those listed above. The additional information may be regarding the characteristics, such as shape, size, and performance, of the physical object or may be other additional properties of the physical object, such as compatible accessories.

The present subject matter discloses systems and methods for sharing augmented reality content among a plurality of users. In some implementations, a distributed augmented reality system implements distributed augmented reality by sharing augmented reality content among a plurality of users.

In some examples, the distributed augmented reality system is implemented using a plurality of computing systems. Each of these computing systems may run a server system (referred to herein as a distributed augmented reality server (DARS) system) or a client system (referred to herein as a distributed augmented reality client (DARC) system) or both the DARS system and the DARC system. Examples of computing systems which may run either or both the DARC system and DARS system include, but are not limited to, a laptop computer, a desktop computer, a notebook, a workstation, a mainframe computer, a virtual machine, a server, a network server, a media player, a smartphone, an electronic book reader, a gaming system, a tablet, wearable smart glasses such Google™ Glass and the like.

Each of the DARC system and DARS system may be understood to comprise a plurality of subsystems which perform the various functionalities of the DARC system and DARS system respectively. The subsystems may be understood to include routines, programs, objects, components, and data structures, which perform particular tasks or implement particular abstract data types. The subsystems may also be implemented as, signal processor(s), state machine(s), logic circuitries, and/or any other system or component that manipulate signals based on operational instructions. Further, the subsystems can be implemented by one or more hardware components, by computer-readable instructions executed by a processing unit, or by a combination thereof.

A computing system which includes some or all of the subsystems of only the DARS system (and not of the DARC system) is henceforth referred to as a DARS-Only (DARSO) system. Similarly, a computing system which includes some or all of the subsystems of only the DARC system (and not of the DARS system) is henceforth referred to as a DARC-Only (DARCO) system. A computing system which runs some or all of the subsystems of both the DARC system and the DARS system is henceforth referred to as a DAR-mixed (DARM) system. A computing system which does not run any subsystem of either the DARC system or the DARS system is henceforth referred to as a conventional computing system.

The distributed augmented reality system may be implemented in various configurations which may include various combinations of the DARSO system(s), DARCO system(s) and the DARM system(s). In some implementations, the distributed augmented reality system may also include conventional computing systems. The working of the distributed augmented reality system is explained in the context of three exemplary configurations. It should be appreciated by the reader that various other configurations of operating the distributed augmented reality system may also be devised which would be variations of the three exemplary configurations explained below.

The distributed augmented reality system may be implemented in: a) a DARSO centric model; b) a DARCO centric model; and c) a mixed model.

### Mode 1: DARSO Centric Model.

In the DARSO centric model, the distributed augmented reality system comprises one or more DARSO systems. The distributed augmented reality system may also include one or more of the DARCO system, the DARM system or the conventional computing systems. The one or more of the DARCO system, the DARM system or the conventional computing systems are collectively referred to as the client systems. It should be appreciated by the reader that even though the DARSO centric model is explained in the context of the DARSO system, the functionality of the DARSO system may be done by any DARM system which includes the requisite subsystems of the DARS system.

As mentioned earlier, the DARSO system may be implemented as various computing systems which include, but are not limited to a server, a desktop personal computer, a notebook or a portable computer, a mainframe computer, a virtual machine, a tablet, a smartphone, image capturing systems, such as cameras, sensors, wearable smart glasses such as Google Glass, and in a mobile computing environment. In the DARSO centric model, there may be a single or a plurality of DARSO system(s) as well as a single or a plurality of client system(s). For the sake of simplicity of explanation, the working of the distributed augmented reality system is explained in the context of a singular DARSO system and a plurality of client systems. However, the same should not be construed as a limitation. It should be understood by the reader that the functionalities of the DARSO system as explained below may be distributed and/or replicated across multiple DARSO systems or DARM systems. In some examples, the users of the client systems may access the DARSO systems through various techniques including, but not limited to, a browser, a mobile application, and or widget.

The working of the DARSO systems is explained in an exemplary situation in which a site engineer, a plumber, an electrician, and a construction engineer are collaborating on a construction site. In operation, the DARSO systems receives source data from various data sources, such as the client systems, the sensors coupled with either the client systems or the DARSO systems, a content repository or from the internal storage of the DARSO system itself or from other DARSO systems and client systems, which may be connected either directly or over a network. The DARSO system may also obtain data from other data sources, such as a web server or a client system which facilitates a user to upload source data. The source data may be video data, audio data, multimedia data, textual data and so on. In some examples, a first user may use a first client system, associated with the first user, to capture a scene of a physical object, say a building. The scene may be captured as an image or a video (which in turn may be represented as a series of images). The source data may also include AR data. For example, a raw data of a building, captured by a client system, may be enhanced at the client system itself and then may be forwarded to or obtained by the DARSO system.

Post receiving, the DARSO system may pre-process the source data by editing one of the source data parameters, such as hue, saturation, color balance, tone balance, aspect ratio, frames per second, resolution and so on. The DARSO system may also cleanse the source data, by removing noise for example by passing the data through various commercially available filters. Thereafter, the DARSO system analyzes the source data to contextually identify the objects of interest. For example, if the source data of a building is received from a construction engineer, then the DARSO system may contextually identify the objects of interest to be the plumbing system, the electrical and power distribution systems, the structural beams and so on. However, if the source data is received from a tourist, the DARSO system may contextually identify the objects on interest to be the locations or the monuments which are tourist spots or places which are promoted for tourism purposes.

In some examples, based on AR enhancement rules and the outcome of the identification of the objects of interest, the DARSO system may generate AR data. In some examples, the generated AR data may be used for annotating one or more objects of the interest. For example, the DARSO system may enhance the source data, which comprises an image of the building being constructed, by generating AR data for annotating the plumbing systems of the building, the electricity and power distribution system of the building and so on. The annotations may be in form of textual data or audio data or video data or audio-video data or multimedia data, such as animations, or a combination thereof. For example, annotations on the electricity and power distribution system may display the projected and the maximum values of current and voltage at each electrical junction and/or each of the power points. In another example, the annotations may show how to operate or service the objects of interest. For example, the annotations may display an animation to demonstrate to the construction engineer the procedure to lay the electricity supply lines will be laid, the instructions to install the circuit breakers, and so on.

In general the generated AR data may be understood to include information deduced from source data, coordinates of objects of interest in an image frame, recognized voice from an audio clip, recognized pattern (for example an error code may be recognized from an audio beep or network failure points, in a navigational route, may be recognized based on the pattern of network data from the modem), overlay information (for example in the form of audio data, textual data, graphic data, multimedia data, video data and so on). In some examples, the AR data may comprise non-overlay information ( which may be in the form of audio data, textual data, graphic data, multimedia data, video data and so on), user annotations, details about engines that were used, details about optimizations done on the overlays and annotations, terms of service and so on.

In some examples, the DARSO system may not be able to identify a single object of interest in the source data. The failure of the DARSO system to identify a single object of interest may act as an input and may result in generation of AR data being triggered.

Thereafter, the DARSO system may transmit the generated AR data to the one or more client systems for various purposes, such as for rendering or for storage. In some implementations, the DARSO system may combine the AR data and the source data and send it as composite data. In other implementations the DARSO system may transmit only the AR data which will be super-imposed on the source data by the client system. In yet some other implementations, the DARSO system may transmit the AR data and the source data separately and the client system will combine the AR data and the source data for rendering at its end.

In certain cases, the users of the client systems may have to collaborate. For example, the plumber, the electrician, the site engineer, and the construction engineer may have to discuss or seek help or guidance from one another or from a different user, such as a potential buyer. In such situations, the first user of the first client system requests the DARSO system to connect the first user with at least a second user of a second client system. For example, the construction engineer may request assistance of the plumber, the electrician, and the construction engineer for, say, laying the connection pipes and the fittings.

In such a scenario, the DARSO system connects the first client system with the second client system. The second user may provide inputs to the first user by providing annotations on the source data. The second user may provide inputs through various modes, such as textual input, video recordings, voice recordings, gestures, touch screen inputs and so on. The DARSO system receives the user annotations from the second client system of the second user and re-routes the same to the first client system of the first user.

In certain cases, the DARSO system may further process the user annotations received from the second client system of the second user before transmitting it to the first client system. This processing may include changing one or more properties of the annotations, such as hue, saturation, color balance, tone balance, aspect ratio, frames per second, and resolution. The processing may also include encrypting and/or decrypting the user annotations. In some examples, the DARSO system may further enhance the annotations received from the second user. For example, say the site engineer annotates a particular electrical junction and marks the area asking the electrician to install a circuit breaker in the electrical junction. The DARSO system may then further enhance the site engineer's annotations by demonstrating the installation process of the circuit breaker to the electrician. In some examples, the DARSO system may implement various natural language processing techniques to analyze the annotations and post analysis may further enhance the annotations with additional information based on pre-defined rules or based on user input. Thus, in some examples, the DARSO system may further demonstrate the installation process of the circuit breaker only if such information is requested by the electrician.

In some examples, the DARSO system may determine the device capabilities of each of the client systems. In some implementations, the DARSO system may query the client systems to determine the device capabilities of the client systems. In some implementations, the DARSO system may retrieve the device capabilities of the client systems from a pre-configured repository. The device capabilities may include various system capability parameters, such as screen resolution, processing power, random access memory (RAM), availability of graphics card, availability of three dimensional (3-D) rendering capabilities, presence of audio equipment, and so on. Thereafter, the DARSO system processes the AR data for each of the client system. For example, based on the determined device capabilities, the DARSO system may customize various parameters, such as resolution, encryption technique, and aspect ratio, of the AR data for each of the client system, based on the determined device capabilities of each of the client system. Thereafter, the DARSO system may forward the processed AR data to the client systems for various purposes, such as rendering.

In some examples, the DARSO system may process the AR data for each of the users of the client systems based on AR workflow rules. For example, the DARSO system may add or remove annotations based on the work profile of the user of the client system. For example, when transmitting the AR data to the electrician, the DARSO system may remove the details regarding the plumbing system. Further, the DARSO system may also add more annotations related to the electricity and power distribution system. In some examples, the DARSO system may process the AR data for each of the users of the client systems based on the profile, such as expertise, experience, and role, of the user. For example, the DARSO system may enhance the AR data with a more detailed set of instructions for a junior electrician and a less detailed set of instructions for a senior electrician. Thereafter, the DARSO system forwards the processed AR data to the client systems.

In some examples, the DARSO system may filter the processed AR data for each of the users of the client systems based on AR distribution rules. For example, the DARSO system may remove certain annotations or mask a portion of either the source data or the AR data or both before transmitting the AR data to the client system. For example, say the site engineer intends to share the data of the building with a potential customer. Then the DARSO system, based on either the site engineer's inputs or on pre-configured rules, may mask the underlying details of the plumbing and electrical systems of the building and may show the potential customer only the potential power points as would be seen on the walls and so on. Thereafter, the DARSO system forwards the filtered AR data to the client systems.

### Mode 2: DARCO Centric Model

In the DARCO centric model, the distributed augmented reality system comprises one or more DARCO systems. The distributed augmented reality system may also include one or more of the DARCO system(s), the DARM system(s) or the conventional computing system(s). It should be appreciated by the reader that even though the DARCO centric model is explained in the context of the DARCO system, the functionality of the DARCO system may be done by any DARM system which includes the requisite subsystems of the DARC system.

As mentioned earlier, the DARCO system may be implemented as various computing systems which include, but are not limited to a server, a desktop personal computer, a notebook or a portable computer, a mainframe computer, a virtual machine, a tablet, a smartphone, image capturing systems, such as cameras, sensors, wearable smart glasses such as Google™ Glass, and in a mobile computing environment. In the DARCO centric model, there may be a plurality of DARCO system(s) as well as a single or a plurality of conventional computing system(s). It should be understood by the reader that the functionalities of the DARCO system as explained below may be distributed and/or replicated across multiple DARCO systems or DARM systems. It should be understood by the reader that the DARCO centric model may also include one or more DARSO systems. In some examples, the users of the DARCO systems may access the distributed augmented reality system through a browser or a mobile application or widget and so on.

The working of the DARCOO systems is explained in an exemplary situation in which a group of tourists, who understand different languages, are exploring a tourist place. In operation, a DARCO system may receive data from various data sources, such as the other DARCO systems, the DARM systems, the sensors coupled with either the DARCO systems, the DARM systems or the DARSO systems, a content repository or from the internal storage of the DARSO system itself or from other DARSO systems, the DARCO systems, and the DARM systems, which may be connected either directly or over a network. The DARCO system may also obtain data from other data sources, such as a web server or a client system which facilitates a user to upload source data. The source data may be video data, audio data, multimedia data, textual data and so on. The source data may also include AR data. For example, a raw data of a building, captured by a sensor, may be enhanced by a DARM system and then may be forwarded to or obtained by the DARCO system. Thus, in some examples, the received data may be understood to comprise source data and annotations on the source data, which may have imposed on the source data. In some examples, the received data would include only the AR data and the DARCO may retrieve or receive the source data from various sources, such as the DARS systems, the sensors coupled with either the DARCO systems or the DARS systems or other DARCO systems, a content repository or from the internal storage of the DARCO system itself or from other DARM systems, which may be connected either directly or over a network. The source data may be video data, audio data, multimedia data, textual data and so on.

In some examples, a first user may use a first DARCO system, associated with the first user, to capture a scene of a physical object, say a building. The scene may be captured as an image or a video (which in turn may be represented as a series of images). This captured data may also act as the source data.

On receiving the AR data, the DARCO system may modify the AR data based on client AR enhancement rules. For example, the DARCO system may at least one of filter or adds annotations on one or more of the objects of interest based on client AR enhancement rules. For example, a first tourist may opted not to receive annotations of, say food outlets. So the DARCO system may filter the annotations which provide information about food outlets. In another example, a second tourist may have opted to know the names of the places in his native as well as the local language. In such cases, the DARCO system may enhance the annotations by providing translations as appropriate.

In some example, the DARCO system may determine its device capabilities to ascertain it can process the AR data as-is. The device capabilities may include various system capability parameters, such as screen resolution, processing power, random access memory (RAM), availability of graphics card, availability of three dimensional (3-D) rendering capabilities, presence of audio equipment, and so on. In case the DARCO system determines that it is not capable of processing the AR data as-is optimally, then the DARCO system may process the AR data and may change one or more parameters of the AR data so that the DARCO system may render the AR data. In some examples, the DARCO system may amend one or more parameters, such as hue, saturation, color balance, tone balance, aspect ratio, frames per second, resolution and so on, of the AR data to make it suitable for processing.

In some examples, the DARCO system may further process the AR data based on client AR workflow rules. For example, the DARCO system may add or remove annotations based on the work profile of the user of the DARCO system. For example, when displaying the AR data to a first tourist, the DARCO system may remove the details regarding the places which the first tourist has visited before and add more annotations related to the places which the first tourist is yet to visit or is interest to visit, such as museum, art galleries and so on.

In some examples, the DARCO system may filter the processed AR data for based on client AR distribution rules. For example, the DARCO system may remove certain annotations or mask a portion of either the source data or the AR data or both before rendering the AR data on the DARCO system. For example, local laws may say certain portions of a site, which are of national importance, should not be annotated for tourists. In such cases, the DARCO system may mask the portions of the site before displaying the AR data to the user.

In certain cases, the users of the DARCO systems may wish to collaborate. For example, a first tourist may wish to discuss or seek guidance from other tourists or from a tourist guide. In such situations, the first user of the first DARCO system requests to connect the first user with at least a second user of a second DARCO system. In some examples, the two DARCO systems may determine each other device capabilities to ascertain the optimal way of establishing communication. In some examples, the either of users may select the mode of communication.

For example, say the first user of the first DARCO system requests the inputs of the second user. Once the second user is connected, the second user may provide inputs through various modes, such as textual input, video recordings, voice recordings, gestures, touch screen inputs and so on. The first DARCO system receives the user annotations from the second DARCO system of the second user and forwards the same to the first user for various purposes, such as rendering, and storage.

In certain cases, the first DARCO system may further process the user annotations received from the second DARCO system of the second user before rendering. This processing may include changing one or more properties of the annotations, such as hue, saturation, color balance, tone balance, aspect ratio, frames per second, and resolution. In some examples, the first DARCO system may further enhance the annotations received from the second user. For example, say the first DARCO system may translate the textual information provided by the second user to the local language of the first user.

### Mode 3: Mixed Model

In the mixed model a single computing system, i.e., the DARM system, encompasses some or all of the features of both the DARS system and the DARC system. This model comprises of one or more of the DARSO system(s), one or more of the DARCO system(s), one or more of the DARM system(s) or one or more of the conventional computing systems.

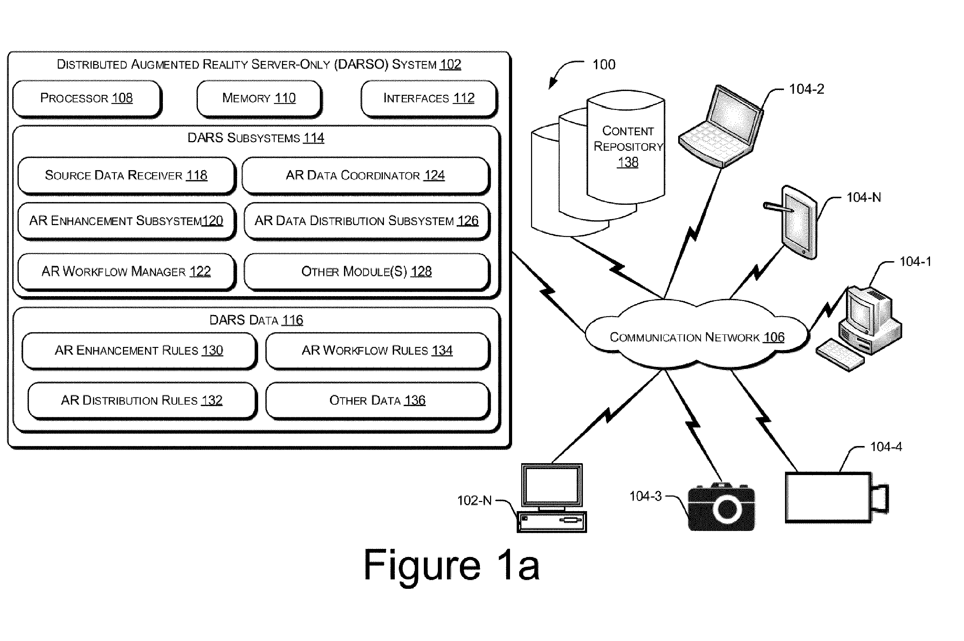

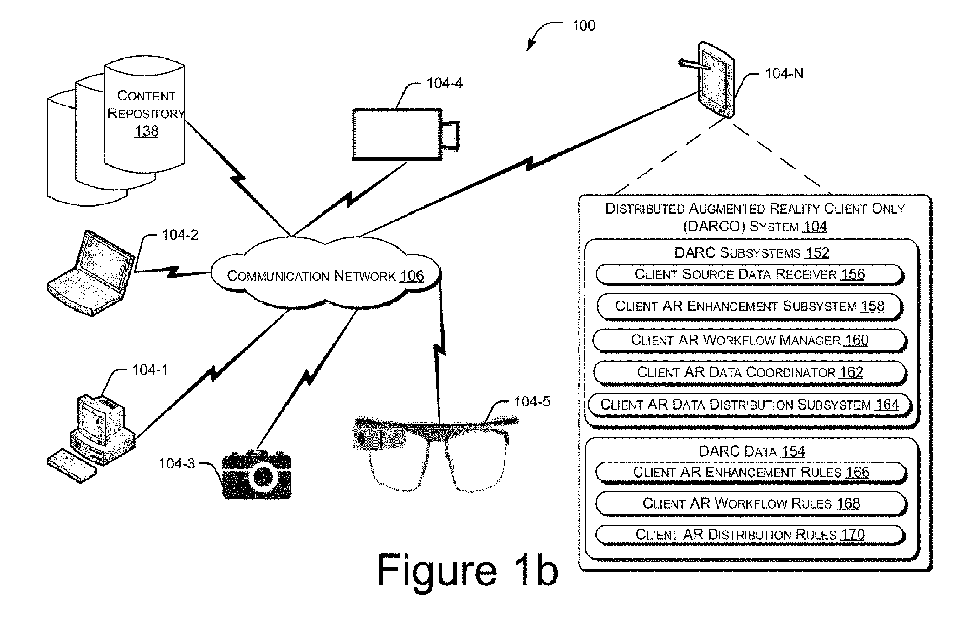

Thus, the distributed augmented reality system facilitates sharing augmented reality content among a plurality of users. The working of the systems and methods for sharing augmented reality content among a plurality of users is described in greater detail in conjunction with FIG 1-.4. It should be noted that the description and drawings merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and are to be construed as being without limitation to such specifically recited examples and conditions. Moreover, all statements herein reciting principles, aspects, and embodiments of the present subject matter, as well as specific examples thereof, are intended to encompass equivalents thereof. While aspects of the systems and methods can be implemented in any number of different computing systems environments, and/or configurations, the embodiments are described in the context of the following exemplary system architecture(s).

FIG. 1a illustrates a distributed augmented reality system 100 implementing a distributed augmented reality server only (DARSO) system 102 for sharing augmented reality content among a plurality of users, according to some embodiments of the present subject matter. Fig. 1b illustrates distributed augmented reality system 100 implementing a distributed augmented reality client only (DARCO) system 104 for sharing augmented reality content among a plurality of users, according to some embodiments of the present subject matter.

With reference to Fig. 1a, in one implementation, the DARSO system(s) 102 and the client systems may be included within an existing information technology infrastructure of an organization. The client systems may be understood to be a collective term for the DARCO systems 104, the DARM systems (not shown in figure) or the conventional computing systems (not shown in figure). In some examples, the DARSO system(s) 102 and the client systems may be interfaced with the existing data warehouses, data marts, data repositories, database and file management system(s), of the organization. The DARSO system(s) 102 and the client systems may be implemented in a variety of computing systems, such as a laptop computer, a desktop computer, a notebook, a workstation, a mainframe computer, a virtual machine, a server, a network server, a media player, a smartphone, an electronic book reader, a gaming system, a tablet, wearable smart glasses such Google™ Glass and the like.

It will be understood that the DARSO system 102 may be accessed by users through the client systems, such as the one or more DARCO systems 104-1, 104-2, 104-3, 104-N, collectively referred to as DARCO systems 104. Examples of the client systems include, but are not limited to, a desktop computer, a portable computer, a mobile phone, a handheld system, a workstation. In some examples, the client systems may include, for example, any image capturing system, such as a digital camera and a video camera. In some examples, the DARSO system 102 and the client systems may be communicatively coupled with each other, either directly or through a communication network 106, also referred as the network 106.

The network 106 may be a wireless network, wired network or a combination thereof. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the network 106 may include a variety of network systems, including routers, bridges, servers, computing systems, storage systems, etc.

In one implementation, the DARSO system 102 includes a processor 108, a memory 110 coupled to the processor 108 and interfaces 112. The processor 108 may be implemented as one or more microprocessors, microcomputers, microcontrollers, digital signal processors, central processing units, state machines, logic circuitries, and/or any systems that manipulate signals based on operational instructions. Among other capabilities, the processor 108 is configured to fetch and execute computer-readable instructions stored in the memory 110. The memory 110 can include any non-transitory computer-readable medium known in the art including, for example, volatile memory (e.g., RAM), and/or non-volatile memory (e.g., EPROM, flash memory, etc.).

The interface(s) 112 may include a variety of software and hardware interfaces, for example, a web interface, a graphical user interface, etc., allowing the DARSO system 102 to interact with the client systems. Further, the interface(s) 112 may enable the DARSO system 102 respectively to communicate with other computing systems, such as content repositories, web servers, file servers, computer peripherals, either directly or over the network 106. The interface(s) 112 can facilitate multiple communications within a wide variety of networks and protocol types, including wired networks, for example LAN, cable, etc., and wireless networks such as WLAN, cellular, or satellite. The interface(s) 112 may include one or more ports for connecting a number of systems to each other or to another server.

In one example, the DARSO system 102 includes the DARS subsystems 114 and DARS data 116. In one embodiment, the DARS subsystems 114 and the DARS data 116 may be stored within the memory 110. In one example, the DARS subsystems 114, amongst other things, include routines, programs, objects, components, and data structures, which perform particular tasks or implement particular abstract data types. The DARS subsystems 114 may also be implemented as, signal processor(s), state machine(s), logic circuitries, and/or any other system or component that manipulate signals based on operational instructions. Further, the DARS subsystems 114 can be implemented by one or more hardware components, by computer-readable instructions executed by a processing unit, or by a combination thereof.

In one implementation, the DARS subsystems 114 further include a source data receiver 118, an AR enhancement subsystem 120, an AR workflow manager 122, an AR data coordinator 124, an AR data distributor 126, and other subsystems 128. The other subsystems 128 may perform various miscellaneous functionalities of the DARSO system 102. It will be appreciated that such aforementioned subsystem may be represented as a single subsystem or a combination of different subsystems.

In one example, the DARS data 116 serves, amongst other things, as a repository for storing data fetched, processed, received and generated by one or more of the DARS subsystems 114. In one implementation, the DARS data 116 may include, for example, AR enhancement rules 130, AR distribution rules 132, AR workflow rules 134, and other data 136. In one embodiment, the DARS data 116 may be stored in the memory 110 in the form of various data structures. Additionally, the aforementioned data can be organized using data models, such as relational or hierarchical data models. The other data 136 may be used to store data, including temporary data and temporary files, generated by the DARS subsystems 114 for performing the various functions of the DARSO system 102.

In one implementation, the DARSO system 102 is communicatively coupled with a content repository 138. The content repository 138 may comprise one or more commercially available data storage media, such as compact discs, magnetic tapes, SATA disks, and so on. The content repository 138 may also implement various commercially available database management systems, such as Oracle™ Database, and Microsoft™ SQL Server. In one example, the content repository 138 stores content, such as articles, news, music, books, movies, and videos which may act as the source data and/or the basis of AR data. In one implementation, the content repository 138 may be implemented within the DARSO system 102. In one example, the content repository 138 may be understood to include data warehouses, database management systems, data marts, and so on.

In operation, the users of the client systems may access the DARSO system 102 through various techniques, such as a browser, a web based application, an applet, a mobile application and a widget. The working of the distributed augmented reality system 100 is explained in the exemplary context of a construction site in which a site engineer, a plumber, an electrician, and a construction engineer are collaborating on constructing a building. It is assumed that the construction engineer is at the construction site, whereas the site engineer, the plumber and the electrician are at remote locations.

In operation, the DARSO system 102 receives source data from various data sources, such as the DARCO systems 104, the sensors coupled with either the DARCO systems 104 or the DARSO system 102, a content repository 138 or from the internal storage of the DARSO system 102 itself or from other DARS systems (not shown in the figure), which may be connected either directly or over the network 106. The source data may be video data, audio data, multimedia data, textual data and so on.

In some examples, the construction engineer may use a first client system, associated with the construction engineer, to capture a scene of a physical object, say a building. The scene may be captured as an image or a video (which in turn may be represented as a series of images). The scene may also include measurements of other physical parameters, such as temperature, pressure, and humidity. The first client system thereafter establishes communication with the DARSO system 102 either directly or over the network 106.

The source data receiver 118 of the DARSO system 102 receives the source data from the client system. In other examples, the source data receiver 118 may retrieve the source data from a content repository 138 or from its own internal storage or from another DARS system (not shown in figure) or from a webserver or may be uploaded by the user. In some examples, the source data receiver 118 may pre-process the source data by editing one of the source data parameters, such as hue, saturation, color balance, tone balance, aspect ratio, frames per second, resolution and so on. The source data receiver 118 may also cleanse the source data, by removing noise. Thereafter, the source data receiver 118 analyzes the source data to contextually identify the objects of interest. In some examples, the source data receiver 118 may implement various image recognition techniques, such as contour and boundary creation, to identify the objects of interest. For example, say the construction engineer captures an image of the building being observed. Then, the source data receiver 118 may contextually identify the objects of interest to be the plumbing system, the electrical systems and connections, the structural beams and so on.

In some examples, based on AR enhancement rules and the outcome of the identification of the objects of interest, the AR enhancement subsystem 120 may generate AR data, for example by annotating one or more of the identified objects of interest. For example, the AR enhancement subsystem 120 may enhance the source data, which comprises an image of the building being constructed, by generating AR data which may be used for annotating the plumbing systems of the building, the electricity and power distribution system of the building and so on. The annotations may be in form of textual data or audio data or video data or audio-video data or multimedia data, such as animations, or a combination thereof. For example, annotations on the electricity and power distribution system may display the projected and the maximum values of current and voltage at each electrical junction and/or each of the power points. In another example, the annotations may show how to operate or service the objects of interest. For example, the annotations may display an animation to demonstrate to the construction engineer the procedure to lay the electricity supply lines, the set of instructions to install the circuit breakers, and so on.

As mentioned earlier, the generated AR data may be understood to include information deduced from source data, coordinates of objects of interest in an image frame, recognized voice from an audio clip, recognized pattern (for example an error code may be recognized from an audio beep or network failure points, in a navigational route, may be recognized based on the pattern of network data from the modem), overlay information (for example in the form of audio data, textual data, graphic data, multimedia data, video data and so on). In some examples, the AR data may comprise non-overlay information (which may be in the form of audio data, textual data, graphic data, multimedia data, video data and so on), user annotations, details about engines that were used, details about optimizations done on the overlays and annotations, terms of service and so on.

Thereafter, the AR data distribution subsystem 126 may transmit the generated AR data to the one or more client systems for various purposes, such as for rendering or for storage. In some implementations, the AR data distribution subsystem 126 may combine the AR data and the source data and send it as a composite data. In other implementations the AR data distribution subsystem 126 may transmit only the AR data which will be super-imposed on the source data by the client system. In yet some other implementations, the AR data distribution subsystem 126 may transmit the AR data and the source data separately and the client system may combine the AR data and the source data for processing by the client system.

In certain cases, the users of the client systems may have to collaborate. For example, the plumber, the electrician, the site engineer, and the construction engineer may have to discuss or seek help or guidance or approval from one another or from a different user, such as a buyer of a flat in the building. For example, the construction engineer may want to discuss the laying of power supply cables and plumbing pipes with the electrician and the plumber. He may further wish to obtain approval from the site engineer and the buyer. In such situations, the construction engineer, who is using the first client system, requests the DARSO system 102 to connect the first client system with at least a second client system. It should be noted that the client system may be simultaneously connected with a plurality of other client system(s) either directly or over the network 106.

In such a scenario, the DARSO system 102 connects the first client system with the second client system. In some examples, the AR data coordinator 124 may coordinate the establishing the communication between the two client systems. In some examples, the AR data coordinator 124 may ascertain the optimal method of establishing communication between the two client systems. In some examples, the two client systems may communicate with each other to determine the optimal method of establishing connection.

Once the connection has been established, the second client system, of the site engineer, may display the image of the building with the same annotations or different annotations as seen by the construction engineer. For example, the electrician may be shown the layout of the power distribution pipes; the plumber may be shown the layout of the plumbing lines, whereas the site engineer may be shown the layout of both the power distribution pipes and the plumbing lines.

The second user, which may be one or more of the plumber, electrician, and the site engineer, may provide inputs to the construction engineer by providing user annotations on the source data or the AR data. The second user may provide inputs through various modes, such as textual input, video recordings, voice recordings, gestures, touch screen inputs and so on. The DARSO system 102 receives the user annotations from the second client system of the second user and re-routes the same to the first client system of the construction engineer.

In certain cases, the AR workflow manager 122 of the DARSO system 102 may further process the user annotations received from the second client system before transmitting it to the first client system. This processing may include changing one or more properties of the annotations, such as hue, saturation, color balance, tone balance, aspect ratio, frames per second, and resolution. The processing may also include encrypting and/or decrypting the user annotations. In some examples, the AR workflow manager 122 may further enhance the annotations received from the second user. For example, say the electrician annotates a particular electrical junction and marks the area asking the construction engineer to facilitate the installation of a fuse box in the electrical junction. The AR workflow manager 122 may then further enhance the construction engineer's annotations by demonstrating the installation process of the switch box to the construction engineer, or mention the size (in terms of length, breadth and depth) of the switch box to the construction engineer. As mentioned earlier, in some examples, the AR workflow manager 122 may implement various natural language processing techniques to analyze the annotations and post analysis may further enhance the annotations with additional information based on pre-defined rules or based on user input. Thus, in some examples, the AR workflow manager 122 may further demonstrate the installation process of the fuse box only if such information is requested by the construction engineer.

In some examples, the AR data coordinator 124 of the DARSO system 102 may determine the device capabilities of each of the client systems. In some implementations, the AR data coordinator 124 may query client system to determine the device capabilities of the client systems. In some implementations, the AR data coordinator 124 may retrieve the device capabilities of the client systems from a pre-configured repository. As mentioned earlier, the device capabilities may include various system capability parameters, such as screen resolution, processing power, random access memory (RAM), availability of graphics card, availability of three dimensional (3-D) rendering capabilities, presence of audio equipment, and so on. Thereafter, the AR data coordinator 124 customizes the processing of the AR data or the source data or both for each of the client system. For example, based on the determined device capabilities, AR data coordinator 124 may customize various parameters, such as resolution, encryption technique, and aspect ratio, of the AR data for each of the client systems, based on the determined device capabilities of each of the client systems. Thereafter, the AR data distribution subsystem 126 of the DARSO system 102 may forward the processed AR data to the client systems for various purposes, such as rendering.

In some examples, the AR workflow manager 122 of the DARSO system 102 may process the AR data for each of the users of the client systems based on AR workflow rules 134. For example, the AR workflow manager 122 may modify AR data, for example by adding or removing annotations, based on the work profile of the user of the client system. For example, when transmitting the AR data to the electrician, the AR workflow manager 122 may remove the details regarding the plumbing system, such as the layout of the plumbing pipes. Further, the AR workflow manager 122 may also add more annotations related to the electricity and power distribution system in the data that is being transmitted to the electrician. In some examples, the AR workflow manager 122 may process the AR data for each of the users of the client systems based on the profile, such as expertise, experience, and role, of the user. For example, the AR workflow manager 122 may enhance the AR data with a more detailed set of instructions for a junior construction engineer and a less detailed set of instructions for a senior construction engineer. Thereafter, the AR data distribution subsystem 126 forwards the processed AR data to the client system.

In some examples, the AR data distribution subsystem 126 may filter the processed AR data for each of the users of the client systems based on AR distribution rules. For example, the AR data distribution subsystem 126 may remove certain annotations or mask a portion of either the source data or the AR data or both before transmitting the AR data to the client system. For example, say the site engineer intends to share the data of the building with a potential customer or a buyer. Then the AR data distribution subsystem 126, based on either the site engineer's inputs or on pre-configured AR distribution rules, may mask the underlying details of the plumbing and electrical systems of the building and may only show the potential customer the potential power points as would be seen on the walls and so on. Thereafter, the AR data distribution subsystem 126 forwards the filtered AR data to the client systems.

Thus, the DARSO system 102 facilitates sharing augmented reality content among a plurality of users. The detailed working of the DARSO system 102 is further explained in conjunction with the FIGs 1b-4.

As mentioned earlier, Fig. 1b illustrates distributed augmented reality system 100 implementing a distributed augmented reality client (DARC) system 104 for sharing augmented reality content among a plurality of users, according to some embodiments of the present subject matter. Fig. 1b represents the DARCO centric model of the distributed augmented reality system 100. In the DARCO centric model, the distributed augmented reality system 100 comprises one or more DARCO systems 104. The distributed augmented reality system may also include one or more of the DARSO system(s) 102, the DARM system(s) (not shown in figure) or the conventional computing system(s) (not shown in figure). It should be appreciated by the reader that even though the DARCO centric model is explained in the context of the DARCO system 104, the functionality of the DARCO 104 system may be done by any DARM system (not shown in figure) which includes the requisite subsystems of the DARC system.

As mentioned earlier, the DARCO system 104 may be implemented as various computing systems which include, but are not limited to a server, a desktop personal computer, a notebook or a portable computer, a mainframe computer, a virtual machine, a tablet, a smartphone, image capturing systems, such as cameras, sensors, wearable smart glasses such as Google™ Glass, and in a mobile computing environment. In the DARCO centric model, there may be a plurality of DARCO system(s) 104 as well as a single or a plurality of conventional computing system(s). It should be understood by the reader that the functionalities of the DARCO system 104 as explained below may be distributed and/or replicated across multiple DARCO systems 104 or DARM systems. It should be understood by the reader that the DARCO centric model may also include one or more DARSO systems 102.

For the sake of simplicity of explanation, the working of the DARCO centric model of the distributed augmented reality system 100 is explained in the context of a plurality of DARCO systems 104. However, the same should not be construed as a limitation. It should be understood by the reader that the client centric model may also include one or more DARSO systems 102. In some examples, the users of the DARCO systems 104 may access the distributed augmented reality system 100 through a browser or a mobile application or widget and so on.

In one example, the DARCO system 104 includes DARC subsystems 152 and DARC data 154. The DARC subsystems 152 may be understood to structurally similar to the DARS subsystems 114, whereas the DARC data 154 may be understood to be structurally similar to the DARS data 116. In some examples, the DARC subsystems 152 comprises client source data receiver 156, client AR enhancement subsystem 158, client AR workflow manager 160, client AR data coordinator 162 and client AR data distribution subsystem 164. In some examples, the DARC data 154 comprises client AR enhancement rules 166, client AR workflow rules 168, and client AR distribution rules 170.

The working of the DARCO systems 104, in the DARCO centric model of the distributed augmented reality system 100 is explained in an exemplary situation in which a group of students are studying in a smart classroom environment with an instructor. In operation, the client source data receiver 156 of the DARCO system 104 may receive at least one of source data and AR data from at least one of another DARCO system 104 or a DARSO system 102 or the content repository 138. In some examples, the received data comprises source data and annotations on the source data, which may have imposed on the source data. In some examples, the received data would include only the annotations, and the client source data receiver 156 may retrieve or receive the source data from various sources, such as the DARSO systems 102, the sensors coupled with either the DARCO systems 104 or the DARSO systems 102 or other DARCO systems 104, a content repository 138 or from the internal storage of the DARCO system 104 itself or from other DARSO systems 102, which may be connected either directly or over the network 106. As stated earlier, the source data may be video data, audio data, multimedia data, textual data and so on.

In some examples, a first student may use a first DARCO system 104, associated with the first student, to capture a scene of a physical object, say an experiment of chemistry in a chemistry laboratory of an educational institution. The scene may be captured as an image or a video (which in turn may be represented as a series of images). This captured data may also act as the source data.

On receiving the AR data, the client AR enhancement subsystem 158, of the DARCO system 104, may modify AR data, for example by at least one of filtering and adding annotations on the one or more objects of interest, based on client AR enhancement rules. For example, a first student may opted not to receive annotations of, say the International Union of Pure and Applied Chemistry (IUPAC) names of the chemical compounds but has opted to receive the chemical formula of the chemical compounds being used in the experiment. So the client AR enhancement subsystem 158, based on client AR enhancement rules 166 which store preferences of the first user, may filter the annotations which provide the IUPAC compounds and adds the annotations which mention the chemical formula of the chemical compounds. In another example, a second student may have opted to know the names of the apparatuses being used in the experiment. In such cases, the client AR enhancement subsystem 158 may add annotations which mention the names of the apparatuses. In yet another example, a third student may have opted to receive the instructions for conducting the experiment in in his native language. In such cases, the client AR enhancement subsystem 158 may enhance the annotations by providing translations as appropriate. In some examples, the client AR enhancement subsystem 158 may provide the translation based on the client AR enhancement rules 166. In other examples, the client AR enhancement subsystem 158 may connect with permitted online translators or with portals on the internet to obtain the translation of the instructions for conduction the experiment.

In some example, the client AR data coordinator 162 may determine its device capabilities to ascertain it can process the AR data as-is. The device capabilities may include various system capability parameters, such as screen resolution, processing power, random access memory (RAM), availability of graphics card, availability of three dimensional (3-D) rendering capabilities, presence of audio equipment, and so on. In case the client AR data coordinator 162 determines that it is not capable of processing the AR data as-is optimally, then the client AR data coordinator 162 may process the AR data and may change one or more parameters of the AR data so that the DARCO system 104 may render the AR data. In some examples, the client AR data coordinator 162 may amend one or more parameters, such as hue, saturation, color balance, tone balance, aspect ratio, frames per second, resolution and so on, of the AR data to make it suitable for processing. In some examples, the client AR data coordinator 162 can request the source of the AR data to provide the data in a format and having technical specifications which is compatible with the device capabilities of the DARCO system 104. In some examples, the DARCO system 104 may determine the AR engines to be used for processing the AR data based on the determined device capabilities.

In some examples, the client AR workflow manager 160 may further process the AR data based on client AR workflow rules. For example, the client AR workflow manager 160 may add or remove annotations based on the profile of the students. For example, when displaying the AR data to the students, the DARCO system 104 may add annotations of the instructors, and removing the annotations made by the other students.

In some examples, the client AR data distribution subsystem 164 of the DARCO system 104 may filter the processed AR data for based on client AR distribution rules 170. For example, the client AR data distribution subsystem 164 may remove certain annotations or mask a portion of either the source data or the AR data or both before rendering the AR data on the DARCO system 104. For example, say the students are divided into different study groups. In such cases, the client AR data distribution subsystem 164 may mask the annotations made by students of a different study group before displaying the AR data to the first student on the DARCO system 104.

In certain cases, the students of the first study group may wish to collaborate. For example, the first student may wish to discuss or seek guidance from other students of his study group or from the instructor. In such situations, the first student, associated with the first DARCO system 104, requests the client AR data coordinator 162 to connect the first student with at least a second user (the second user may be another student of the study group or the instructor) of a second DARCO system 104. In some examples, the client AR data coordinators 162 of the two DARCO systems 104 may determine each other device capabilities to ascertain the optimal way of establishing communication. In some examples, the either of users may select the mode of communication between the two DARCO systems 104.

For example, say the first student of the first DARCO system 104 requests the inputs of the second user. Once, the second DARCO system 104 is connected with the first DARCO system 104, then the second user may provide inputs through various modes, such as textual input, video recordings, voice recordings, gestures, touch screen inputs and so on. The client AR data coordinator 162 of the first DARCO system 104 receives the user annotations from the second DARCO system 104 of the second user and transmits the same to the first user for various purposes, such as rendering and storage.

In certain cases, the client AR data coordinator 162 may further process the user annotations received from the second DARCO system 104 of the second user. This processing may include changing one or more properties of the annotations, such as hue, saturation, color balance, tone balance, aspect ratio, frames per second, and resolution. In some examples, the client AR data coordinator 162 may further enhance the annotations received from the second user. For example, say the client AR data coordinator 162 may translate the textual information provided by the second user to the local language of the first user.

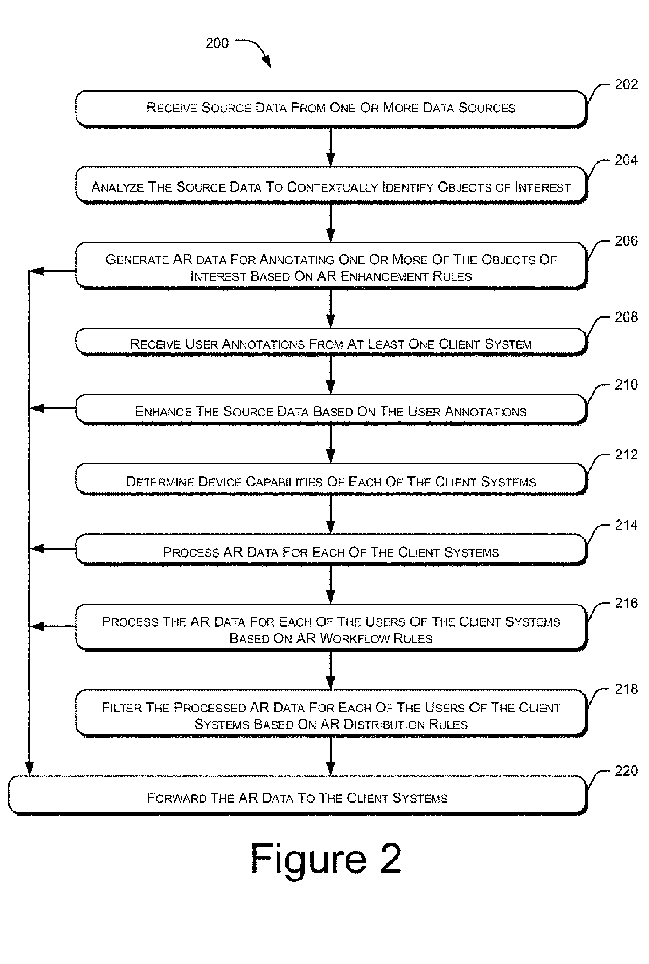

Thus, the DARSO system 102 and the DARCO systems 104, of the distributed augmented reality system 100, facilitate sharing augmented reality content among a plurality of users. The detailed working of the distributed augmented reality system 100 is further explained in conjunction with the FIGs 2-4

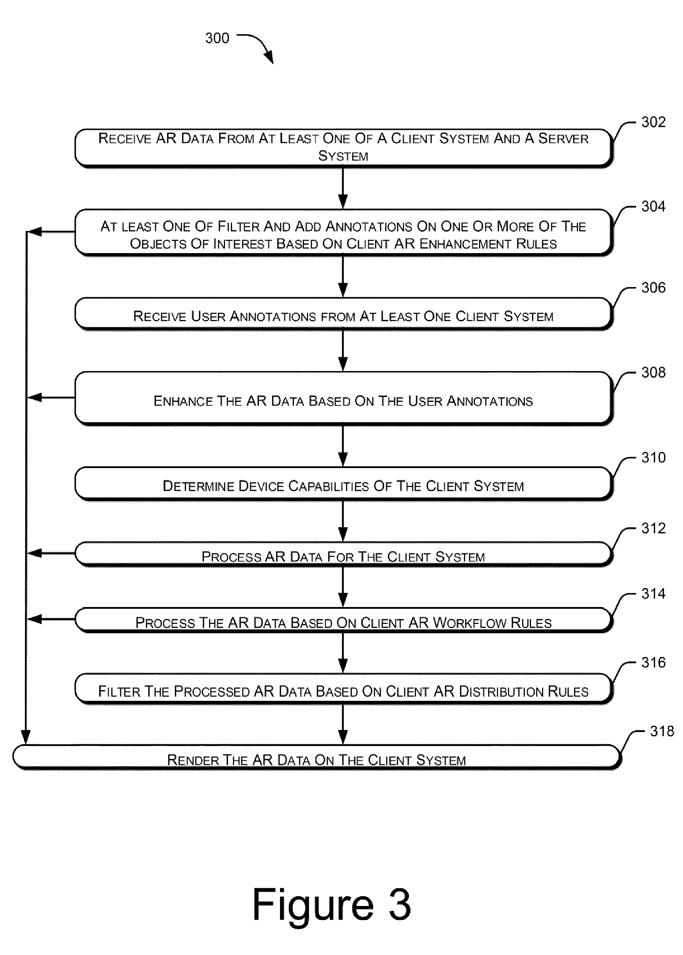

FIGs. 2 and 3 illustrate exemplary computer implemented methods 200 and 300 for sharing augmented reality content among a plurality of users, according to an embodiment of the present subject matter. The methods 200 and 300 may be described in the general context of computer executable instructions. Generally, computer executable instructions can include routines, programs, objects, components, data structures, procedures, subsystems, and functions, which perform particular functions or implement particular abstract data types. The methods 200 and 300 may also be practiced in a distributed computing environment where functions are performed by remote processing systems that are linked through a communication network. In a distributed computing environment, computer executable instructions may be located in both local and remote computer storage media, including memory storage systems.

The order in which the methods 200 and 300 are described is not intended to be construed as a limitation, and any number of the described method blocks can be combined in any order to implement the methods 200 and 300 or alternative methods. Additionally, individual blocks may be deleted from the methods 200 and 300 without departing from the scope of the subject matter described herein. Furthermore, the methods 200 and 300 can be implemented in any suitable hardware, software, firmware, or combination thereof.

With reference to method 200 as depicted in FIG. 2, as shown in block 202, source data is received from one or more client systems. In some examples, the source data receiver 118 of the DARSO system 102 receives the source data from the client systems and other data sources. In other examples, the source data receiver 118 may retrieve the source data from a content repository 138 or from its own internal storage or from another DARS system (not shown in figure). In some examples, the source data receiver 118 may pre-process the source data by editing one or more of the source data parameters, such as hue, saturation, color balance, tone balance, aspect ratio, frames per second, resolution and so on. The source data receiver 118 may also cleanse the source data, by removing noise.

As illustrated in block 204, the source data is analyzed to contextually identify objects of interest. In some examples, the source data receiver 118 analyzes the source data to contextually identify the objects of interest. In some examples, the source data receiver 118 may implement various image recognition techniques, such as contour and boundary creation, to identify the objects of interest.

As depicted in block 206, AR data is generated based on AR enhancement rules. The term "enhancement rule" as used herein preferably refers to logic that modifies source data or AR data for a particular object of interest. For example, an enhancement rule may define one or more annotations that are to be applied to an identified object and/or one or more annotations that are to be deleted or filtered. Different enhancement rules may be used for different users (or groups of users). In some examples, based on AR enhancement rules, the AR enhancement subsystem 120 may generate AR data for annotating one or more of the identified objects of interest. In some examples, the method may then proceed to block 220, wherein the AR data distribution subsystem 126 may forward the AR enhanced data to one or more client systems for various purposes, such as rendering.

At block 208, user annotations are received from at least one of DARC system. In some examples, the AR data coordinator 124 may receive the user annotations from the at least one client system.

As shown in block 210, the source data is enhanced based on the user annotations. In some examples, the AR workflow manager 122 of the DARSO system 102 may further process the user annotations received from a second DARCO system 104 before transmitting it to a first client system. This processing may include changing one or more properties of the annotations, such as hue, saturation, color balance, tone balance, aspect ratio, frames per second, and resolution. The processing may also include encrypting and/or decrypting the user annotations. In some examples, the AR workflow manager 122 may further enhance the annotations by adding or filtering portions of the information received from the second user. In some examples, the method may then proceed to block 220, wherein the AR data distribution subsystem 126 may forward the AR enhanced data to one or more client system for various purposes, such as rendering.

As illustrated in block 212, the device capabilities of each of the client systems are determined. In some examples, the AR data coordinator 124 of the DARSO system 102 may determine the device capabilities of each of the client systems. In some implementations, the AR data coordinator 124 may query the client systems to determine the device capabilities of the client systems. In some implementations, the AR data coordinator 124 may retrieve the device capabilities of the client systems from a pre-configured repository. As mentioned earlier, the device capabilities may include various system capability parameters, such as screen resolution, processing power, random access memory (RAM), availability of graphics card, availability of three dimensional (3-D) rendering capabilities, presence of audio equipment, and so on.

As depicted in block 214, the AR data, for each of the DARC systems, is processed. In some examples, the AR data coordinator 124 customizes the processing of the AR data or the source data or both for each of the client systems. For example, based on the determined device capabilities, AR data coordinator 124 may customize various parameters, such as resolution, encryption technique, and aspect ratio, of the AR data for each of the client systems, based on the determined device capabilities of each of the client systems. In some examples, the method may then proceed to block 220, wherein the AR data distribution subsystem 126 may forward the processed AR data to one or more client systems for various purposes, such as rendering. In some examples, the determined device capabilities may be used for selecting the AR engines for processing the AR data for each of the client systems.

At block 216, the AR data for each of the users of the DARC systems is processed based on AR workflow rules. In some examples, the AR workflow manager 122 of the DARSO system 102 may process the AR data for each of the users of the client systems based on AR workflow rules. In some examples, the method may then proceed to block 220, wherein the AR data distribution subsystem 126 may forward the processed AR data to one or more client systems.

As shown in block 218, the processed AR data, is filtered for each of the users of the client systems based on AR distribution rules 132. In some examples, the AR data distribution subsystem 126 may filter the processed AR data for each of the users of the client systems based on AR distribution rules. For example, the AR data distribution subsystem 126 may remove certain annotations or mask a portion of either the source data or the AR data or both before transmitting the AR data to the client systems.

As illustrated in block 220, the AR data is forwarded to the client systems 104 for rendering. In some examples, the AR data distribution subsystem 126 may forward the AR data to one or more client systems for various purposes, such as for rendering.

With reference to method 300 as depicted in FIG. 3, as shown in block 302, AR data is received from at least one of a DARC system and a server system. In some examples, the client source data receiver 156 of the DARCO system 104 may receive at least one of source data and AR data from various data sources, such as at least one of another DARCO system 104 or a DARSO system 102 or the content repository 138 or a webserver.

As depicted in block 304, AR data is enhanced based on client AR enhancement rules. For example, annotations may be either added or filtered from one or more of the objects of interest for enhancing the AR data. In some examples, the client AR enhancement subsystem 158, of the DARCO system 104, may at least one of filter and add annotations on one or more of the objects of interest based on client AR enhancement rules. In some examples, the method may then proceed to block 318, wherein the client data distribution subsystem 164 processes the enhanced AR data on the DARCO system 104. In some examples, the client data distribution subsystem 164 may render the enhanced AR data on the DARCO system 104

As illustrated in block 306, user annotations are received from at least one DARC system. In some examples, client AR data coordinator 162 of the first DARCO system 104 receives the user annotations from the second DARCO system 104 of the second user.

At block 308, the AR data is enhanced based on the user annotations. In some examples, the client AR data coordinator 162 may further process the user annotations received from the second DARCO system 104 of the second user before rendering. This processing may include changing one or more properties of the annotations, such as hue, saturation, color balance, tone balance, aspect ratio, frames per second, and resolution. In some examples, the client AR data coordinator 162 may further enhance the annotations received from the second user. For example, say the client AR data coordinator 162 may translate the textual information provided by the second user to the local language of the first user. In some examples, the method may then proceed to block 318, wherein the client data distribution subsystem 164 renders the enhanced AR data on the DARCO system 104.

As shown in block 310, device capabilities of the DARC system are determined. In some examples, the client AR data coordinator 162 may determine its device capabilities to ascertain it can render the AR data as-is. The device capabilities may include various system capability parameters, such as screen resolution, processing power, random access memory (RAM), availability of graphics card, availability of three dimensional (3-D) rendering capabilities, presence of audio equipment, and so on.

As depicted in block 312, the AR data is processed, based on the determined device capabilities, for the DARC system. In some examples, the client AR data coordinator 162 may process the AR data and may change one or more parameters of the AR data so that the DARCO system 104 may render the AR data. In some examples, the client AR data coordinator 162 may amend one or more parameters, such as hue, saturation, color balance, tone balance, aspect ratio, frames per second, resolution and so on, of the AR data to make it suitable for rendering. In some examples, the method may then proceed to block 318, wherein the client data distribution subsystem 164 renders the enhanced AR data on the DARCO system 104.

As illustrated in block 314, the AR data is processed based on client AR workflow rules. In some examples, the client AR workflow manager 160 may further process the AR data based on client AR workflow rules. For example, the client AR workflow manager 160 may add or remove annotations based on the profile of the user of the DARCO system 104. In some examples, the method may then proceed to block 318, wherein the client data distribution subsystem 164 renders the enhanced AR data on the DARCO system 104.

At block 316, the processed AR data is filtered based on client AR distribution rules. In some examples, the client AR data distribution subsystem 164 of the DARCO system 104 may filter the processed AR data for based on client AR distribution rules 170. For example, the client AR data distribution subsystem 164 may remove certain annotations or mask a portion of either the source data or the AR data or both before rendering the AR data on the DARCO system 104.

As shown in block 318, the AR data is rendered on the DARC system. In some examples, the client data distribution subsystem 164 renders the enhanced AR data and/or the processed AR data on the DARCO system 104.

### Computer System

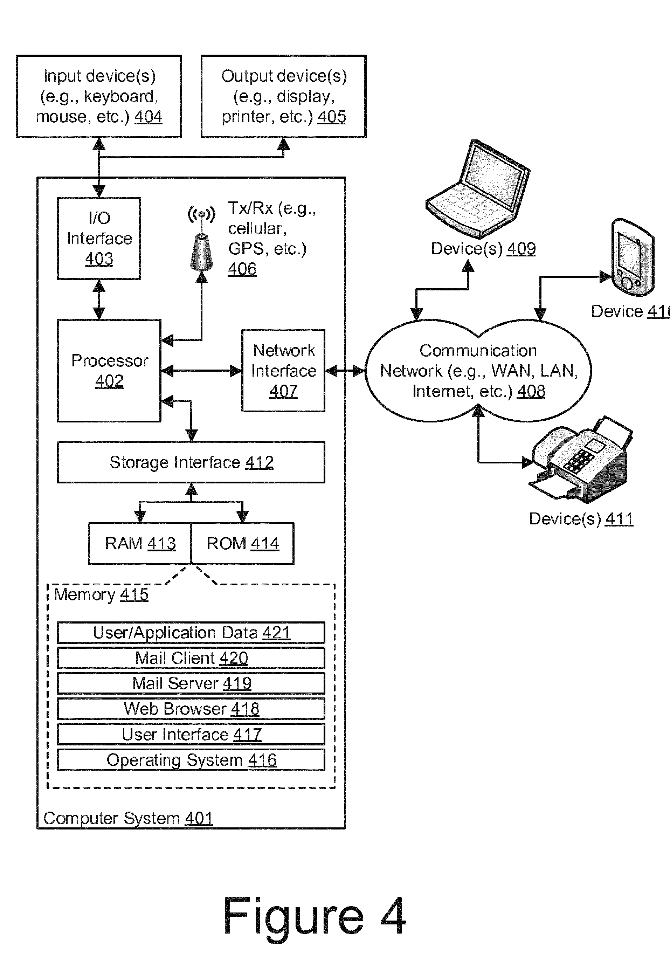

FIG. 4 is a block diagram of an exemplary computer system for implementing embodiments consistent with the present disclosure. Variations of computer system 401 may be used for implementing any of the devices presented in this disclosure. Computer system 401 may comprise a central processing unit ("CPU" or "processor") 402. Processor 402 may comprise at least one of data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM47501UB8, Infineon Technologies X-Gold 418-PMB9800, or the like), providing IEEE 802.11 a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 410, 411, and 412. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magnetooptical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol); secure sockets layer (SSL), Transport Layer Security (TLS), etc. Web browsers may utilize facilities such as AJAX, DHTML, Adobe Flash, JavaScript, Java; application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described a method and a system for sharing augmented reality content among a plurality of users. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., are non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A distributed augmented reality server (DARS) system, for enabling augmented reality distribution among a plurality of systems, the DARS system comprising:
a processor;
a memory communicatively coupled to the processor, wherein the memory stores processor-executable instructions, which, on execution, cause the processor to:
receive at least one of source data and augmented reality (AR) data from at least one of one or more client systems, one or more server systems or one or more data sources;
identify objects of interest present in at least one of the source data and the AR data based on analysis of the at least one of the source data and the AR data;
generate enhanced AR data, based on the outcome of identification of at least one of the objects of interest and one or more AR enhancement rules;
modify at least one of the source data and the AR data based on the generation;
transmit at least one of the modified source data and the modified AR data to the at least one of the one or more client systems, the one or more server systems or the one or more data sources.

2. The DARS system as claimed in claim 1, wherein the instructions, on execution, further cause the processor to:
receive a user annotation from at least one of the one or more client systems, the one or more server systems and the one or more data sources;
modify at least one of the one or more source data and the AR data based on the received user annotation; and
transmit at least one of the enhanced source data and the enhanced AR data to the at least one of the one or more client systems, the one or more server systems and the one or more data sources.

3. The DARS system as claimed in claim 1 or claim 2, wherein the instructions, on execution, further cause the processor to
determine one or more capabilities of the at least one of the one or more client systems, the one or more server systems and the one or more data sources;
select a data processing engine for processing at least one of the AR data and the source data based on the determined capabilities;
modify at least one of the AR data and the source data using the selected data processing engine; and
transmit at least one of the AR data and the source data to the at least one of the one or more client systems, one or more server systems and one or more data sources.

4. The DARS system as claimed in any of the preceding claims, wherein the instructions, on execution, further cause the processor to
modify at least one of the AR data and the source data based on the role of a user of the one or more client systems, the one or more server systems or the one or more data sources; and
transmit at least one of the modified AR data and the modified source data to the at least one of the one or more client systems, the one or more server systems and the one or more data sources.

5. The DARS system as claimed in any of the preceding claims, wherein the instructions, on execution, further cause the processor to:
modify at least one of the AR data and the source data based on at least one AR workflow rule; and
transmit at least one of the AR data and the source data to the at least one of the one or more client systems, the one or more server systems and the one or more data sources.

6. The DARS system as claimed in any of the preceding claims, wherein the instructions, on execution, further cause the processor to:
modify at least one of the AR data and the source data based on at least one AR distribution rule; and
transmit at least one of the AR data and the source data to the at least one of the one or more client systems, the one or more server systems or the one or more data sources.

7. A computer implemented method for enabling augmented reality distribution among a plurality of client system, the method comprising:
receiving at least one of source data and augmented reality (AR) data from at least one of one or more client systems, one or more server systems or one or more data sources;
identifying objects of interest present in at least one of the source data and the AR data based on analysis of the at least one of the source data and the AR data;
generating enhanced AR data based on the outcome of identification of at least one of the objects of interest and one or more AR enhancement rules;
modifying at least one of the source data and the AR data based on the generation;
transmitting at least one of the modified source data and the modified AR data to at least one of the one or more client systems, the one or more server systems and the one or more data sources.

8. The method as claimed in claim 7, wherein the method further comprises:
receiving a user annotation from at least one of the one or more client systems, the one or more server systems and the one or more data sources;
modifying at least one of the one or more source data and the AR data based on the received user annotation; and
transmitting at least one of the enhanced source data and the enhanced AR data to at least one of the one or more client systems, the one or more server systems and the one or more data sources.

9. The method as claimed in claim 7 or claim 8, wherein the method further comprises:
determining one or more capabilities of at least one of the one or more client systems, the one or more server systems and the one or more data sources;
selecting a data processing engine for processing at least one of the AR data and the source data based on the determined capabilities;
modifying at least one of the AR data and the source data using the selected data processing engine; and
transmitting at least one of the AR data and the source data to at least one of the one or more client systems, the one or more server systems and the one or more data sources.

10. The method as claimed in any of claims 7 to 9, wherein the method further comprises:
modifying at least one of the AR data and the source data based on
a role of a user of the one or more client systems, the one or more server systems and the one or more data sources, and/or
at least one AR workflow rule, and/or
at least one AR distribution rule; and
transmitting at least one of the modified AR data and the modified source data to the one or more client systems, the one or more server systems and the one or more data sources.

11. A distributed augmented reality client (DARC) system, for enabling augmented reality distribution among a plurality of systems, the DARC system comprising:
a processor;
a memory communicatively coupled to the processor, wherein the memory stores processor-executable instructions, which, on execution, cause the processor to:
at least one of receive or capture at least one of augmented reality (AR) data and source data from at least one of one or more server systems, one or more data sources, one or more sensors, and one or more client systems;
modify at least one of the AR data and the source data based on one or more data present in at least one of the AR data and the source data based on client AR enhancement rules; and
render at least one of the modified AR data and the modified source data.

12. The DARC system as claimed in claim 11, wherein the instructions, on execution, further cause the processor to:
determine one or more capabilities of at least one of the one or more client systems, one or more server systems and one or more data sources;
select a data processing engine for processing at least one of the AR data and the source data based on the determined capabilities;
process at least one of the AR data and the source data using the selected data processing engine; and
render at least one of the processed AR data and the processed source data.

13. A computer implemented method for enabling augmented reality distribution among a plurality of systems, the method comprising:
at least one of receiving or capturing at least one of augmented reality (AR) data and source data from at least one of one or more server systems, one or more data sources, one or more sensors, and one or more client systems;
modifying at least one of the AR data and the source data based on one or more data present in at least one of the AR data and the source data based on client AR enhancement rules; and
rendering at least one of the modified AR data and the modified source data.

14. The method as claimed in claim 13, wherein the method further comprises:
determining one or more capabilities of the at least one of the one or more client systems, server systems and data sources;
selecting a data processing engine for processing at least one of the AR data and the source data based on the determined capabilities;
processing at least one of the AR data and the source data using the selected data processing engine; and
rendering at least one of the processed AR data and the processed source data.

15. A processor-readable medium comprising instructions which, when executed by a processor, cause the processor to perform the method of any of claims 7 to 10, 13 or 14.
